# EUROPÄISCHE PATENTANMELDUNG

(11) **EP 1 225 318 A2**
(43) Veröffentlichungstag der Anmeldung: **24.07.2002**
(21) Anmeldenummer: 02000788.6
(22) Anmeldetag: 14.01.2002
(51) Int. Cl.: F01P 7/04, F04D 27/00, B60H 1/00, B60R 16/00

(54) **Verfahren zur Regelung der Drehzahl eines Lüfters für elektronische Bauteile oder Geräte in einem Kraftfahrzeug**

(30) Priorität: 13.01.2001 DE 10101347
(71) Anmelder: ROBERT BOSCH GMBH, 70442 Stuttgart (DE)
(72) Erfinder: Pott, Wolfgang, 31139 Hildesheim (DE)

(57) **Zusammenfassung**

Um das Lüftergeräusch eines elektronischen Bauteils oder Geräts in einem Kraftfahrzeug so zu maskieren, dass es den Höreindruck bei der Wiedergabe von akustischen Signalen mit einer Wiedergabeeinrichtung nicht negativ beeinflusst, wird die Drehzahl des Lüfters erfindungsgemäß in Abhängigkeit vom variierenden Lautstärkepegel des von der Wiedergabeeinrichtung erzeugten akustischen Signals geregelt, so dass das Lüftergeräusch jeweils von dem akustischen Signal verdeckt wird.

## Beschreibung

Die Erfindung betrifft ein Verfahren zur Regelung der Drehzahl eines Lüfters für elektronische Bauteile oder Geräte in einem Kraftfahrzeug, das mit einer Wiedergabeeinrichtung für akustische Signale ausgestattet ist.

Elektronische Geräte, wie Autoradios oder das Navigationsgerät eines Fahrerinformationssystems, sind aufgrund der relativ hohen Anforderungen an die Kühlung der elektronischen Bauteile in der Regel mit einem Lüfter ausgestattet. Das durch das Ansaugen und Abblasen von Luft verursachte Lüftergeräusch ist abhängig von der Drehzahl des Lüfters und vom Strömungswiderstand der zu kühlenden Bauteile. Insofern kann das Lüftergeräusch nie vollständig beseitige werden.

Bei vielen Kraftfahrzeugen, insbesondere bei solchen, die nicht mit einer akustisch abgeschlossenen Fahrgastzelle ausgestattet sind, wird das Lüftergeräusch zumindest während der Fahrt vom Motorgeräusch und den Fahrgeräuschen übertönt, so dass es bei der Wiedergabe von akustischen Signalen durch eine entsprechende Wiedergabeeinrichtung nicht isoliert wahrgenommen wird. Bei langsamer Fahrt oder auch bei stehendem Kraftfahrzeug, z.B. an einer Ampel oder im Stau, wird das Lüftergeräusch aber häufig nicht nur wahrgenommen sondern auch als sehr störend empfunden.

### Vorteile der Erfindung

Mit der vorliegenden Erfindung wird ein Verfahren vorgeschlagen, mit dem sich das Lüftergeräusch eines elektronischen Bauteils oder Geräts in einem Kraftfahrzeug so maskieren lässt, dass es den Höreindruck bei der Wiedergabe von akustischen Signalen nicht negativ beeinflusst.

Dies wird erfindungsgemäß dadurch erreicht, dass die Drehzahl des Lüfters in Abhängigkeit vom variierenden Lautstärkepegel des von der Wiedergabeeinrichtung erzeugten akustischen Signals geregelt wird, so dass das Lüftergeräusch jeweils von dem akustischen Signal verdeckt wird.

Erfindungsgemäß ist erkannt worden, dass das Lüftergeräusch nicht zwangsläufig vollständig eliminiert werden muss, um bei der Wiedergabe eines akustischen Signals durch die Wiedergabeeinrichtung nicht wahrgenommen zu werden. Hierfür reicht eine psychoakustische Tarnung des Lüftergeräuschs, die erfindungsgemäß durch eine Regelung der Drehzahl des Lüfters entsprechend dem Lautstärkepegel des akustischen Signals realisiert wird. Auf diese Weise lässt sich das Lüftergeräusch durch das akustische Signal verdecken bzw. maskieren. So kann das Lüftergeräusch beispielsweise bei der Wiedergabe von Musik im Musikpegel versteckt werden, so dass der Geräuschpegel des Lüfters dem An- und Abschwellen des Musikpegels folgt.

In einer vorteilhaften Weiterbildung des erfindungsgemäßen Verfahrens können bei der Regelung der Drehzahl des Lüfters zusätzlich die Motor- bzw. die Fahrgeräusche in der Fahrgastzelle des Kraftfahrzeugs berücksichtigt werden. Dazu ist allerdings eine entsprechende Sensorik zum Erfassen des Geräuschpegels in der Fahrgastzelle erforderlich. Die Drehzahl des Lüfters wird dann nicht nur in Abhängigkeit vom variierenden Lautstärkepegel des von der Wiedergabeeinrichtung erzeugten akustischen Signals geregelt sondern vom Geräuschpegel in der Fahrgastzelle, der sich aus der Überlagerung dieses akustischen Signals mit den Motor- bzw. Fahrgeräuschen ergibt.

Das voranstehend beschriebene Verfahren eignet sich insbesondere zum Maskieren des Lüftergeräuschs der Wiedergabeeinrichtung selbst. Dabei kann es sich um das Ausgabesystem eines Radios, Kassettenrecorders, CD-Players oder auch eines Fahrerinformationssystems handeln.

## Patentansprüche

1. Verfahren zur Regelung der Drehzahl eines Lüfters für elektronische Bauteile oder Geräte in einem Kraftfahrzeug, das mit einer Wiedergabeeinrichtung für akustische Signale ausgestattet ist,
**dadurch gekennzeichnet, dass** die Drehzahl des Lüfters in Abhängigkeit vom variierenden Lautstärkepegel des von der Wiedergabeeinrichtung erzeugten akustischen Signals geregelt wird, so dass das Lüftergeräusch jeweils von dem akustischen Signal verdeckt wird.

2. Verfahren nach Anspruch 1, **dadurch gekennzeichnet, dass** bei der Regelung der Drehzahl des Lüfters zusätzlich die Motor- bzw. die Fahrgeräusche in der Fahrgastzelle des Kraftfahrzeugs berücksichtigt werden.

3. Verwendung eines Verfahrens nach einem der Ansprüche 1 oder 2 zum Maskieren des Lüftergeräuschs einer Wiedergabeeinrichtung für akustische Signale, insbesondere eines Radios, Kassettenrecorders und eines CD-Players.

4. Verwendung eines Verfahrens nach einem der Ansprüche 1 oder 2 zum Maskieren des Lüftergeräuschs eines Fahrerinformationssystems.
